# EUROPÄISCHE PATENTSCHRIFT

(11) **EP 3 050 791 B1**
(45) Veröffentlichungstag und Bekanntmachung des Hinweises auf die Patenterteilung: **11.03.2020**
(21) Anmeldenummer: 15003459.3
(22) Anmeldetag: 04.12.2015
(51) Int. Cl.: B62M 25/08

(54) **VERFAHREN UND VORRICHTUNG ZUM STEUERN AUTOMATISCHER SCHALTVORGÄNGE EINER ELEKTRISCHEN GANGSCHALTVORRICHTUNG EINES FAHRRADS**
METHOD AND DEVICE FOR CONTROLLING THE AUTOMATIC SWITCHING PROCESSES OF AN ELECTRICAL GEAR CHANGER OF A BICYCLE
PROCEDE ET DISPOSITIF DE COMMANDE DE PROCESSUS DE COMMUTATION AUTOMATIQUE D'UN DISPOSITIF ELECTRIQUE DE PASSAGE DE VITESSE D'UN VELO

(30) Priorität: 14.01.2015 DE 102015000422
(43) Veröffentlichungstag der Anmeldung: 03.08.2016
(73) Patentinhaber: SRAM Deutschland GmbH, 97424 Schweinfurt (DE)
(72) Erfinder: Baumann, Sven, 97508 Grettstadt (DE); Schmittfull, Egon, 97440 Schleerieth (DE); Seufert, Uwe, 97688 Bad Kissingen (DE)

(56) Entgegenhaltungen:
- EP-A2- 1 188 661
- EP-B1- 0 899 188
- WO-A2-02/055373
- DE-T2- 69 726 810
- DE-T2- 69 834 873
- US-A- 5 059 158
- US-A- 5 261 858
- US-A1- 2002 094 906

## Beschreibung

Die vorliegende Erfindung betrifft ein Verfahren und eine Vorrichtung zum Steuern automatischer Schaltvorgänge einer elektrischen Gangschaltvorrichtung eines Fahrrads.

Aus dem Stand der Technik sind verschiedene derartige Steuerungsverfahren und Steuerungsvorrichtungen bekannt.

US 5,261,858 offenbart ein automatisches Steuerungsverfahren für eine Fahrradgangschaltung, das eine einstellbare Hysterese vorsieht. Diese Hysterese wird verwendet, um sicherzustellen, dass zwischen einzelnen Gängen nicht zu oft hin und her geschaltet wird. Wenn das Fahrrad in einen neuen Gang geschaltet worden ist, ermittelt der Computer eine gewünschte Radgeschwindigkeit und eine Hochschalt- und Herunterschaltradgeschwindigkeit für den neuen Gang. Die erwünschte Radgeschwindigkeit wird erreicht, wenn die Pedale des Fahrrads mit der gewünschten Trittfrequenz in dem neuen Gang betätigt werden. Die Hochschalt-Radgeschwindigkeit bezeichnet die Radgeschwindigkeit, bei welcher der Computer automatisch in einen höheren Gang schaltet, und die Herunterschalt-Radgeschwindigkeit bezeichnet die Radgeschwindigkeit, bei welcher der Computer automatisch in einen niedrigeren Gang schaltet. Die Hochschalt-Radgeschwindigkeit wird so eingestellt, dass sie größer als die aktuelle Radgeschwindigkeit ist, und die Herunterschaltgeschwindigkeit wird so eingestellt, dass sie niedriger ist als die aktuelle Radgeschwindigkeit. Das Einstellen dieser Hochschalt- und Herunterschalt-Radgeschwindigkeit führt zu einem Hystereseeffekt. Wenn die aktuelle Radgeschwindigkeit die Hochschalt-Radgeschwindigkeit oder die Herunterschalt-Radgeschwindigkeit überschreitet, erzeugt der Computer ein Hochschalt- oder ein Herunterschaltsignal, falls die Kurbel- und Nabenanordnungen geeignet positioniert sind. Gemäß US 5,261,858 kann der Computer die Hochschalt- oder Herunterschalt-Radgeschwindigkeit in bestimmten Situationen verstellen, um eine gleichmäßige Trittfrequenz sicherzustellen.

EP 0 899 188 B1 offenbart ein Verfahren zum automatischen Schalten in einem Schaltmechanismus eines Fahrrads durch eine Schaltsteuerung nach Maßgabe einer ermittelten Geschwindigkeit des Fahrrads. Gemäß EP 0 899 188 B1 sind verschiedene Fahrradgeschwindigkeiten in einer ersten Geschwindigkeitstabelle, in einer zweiten Geschwindigkeitstabelle, in einer dritten Geschwindigkeitstabelle und in einer vierten Geschwindigkeitstabelle hinterlegt. Anhand der in den Geschwindigkeitstabellen hinterlegten Fahrradgeschwindigkeiten wird entschieden, ob zwischen einzelnen Gangstufen geschaltet wird.

US 5,059,158 offenbart ein elektronisches Steuersystem für ein Getriebe eines Fahrrads. In einem vollautomatischen Betriebssystem berechnet das System fortlaufend die theoretische Kadenz (Trittfrequenz) des Fahrers für das derzeitige Übersetzungsverhältnis und die derzeitige Fahrradgeschwindigkeit. Das System ermittelt dann, ob die berechnete Kadenz innerhalb der vom Fahrer gewählten Grenzen liegt. Wenn die berechnete Kadenz zu niedrig ist, informiert das System den Fahrer durch hörbare oder sichtbare Signale und schaltet dann automatisch in den nächstniedrigeren Gang, um die Kadenz des Fahrers zu verkleinern. Wenn umgekehrt die berechnete Kadenz zu hoch ist, informiert das System den Fahrer durch hörbare oder sichtbare Signale und schaltet dann automatisch in den nächsthöheren Gang, um die Kadenz des Fahrers zu vergrößern. Für alle Übersetzungsverhältnisse und Fahrradgeschwindigkeiten hält das System die Kadenz des Fahrers innerhalb voreingestellter Grenzen.

Ferner offenbart auch WO 02/055373 A2 ein automatisches Schaltsystem für ein Fahrrad.

Das Dokument US 2002/0094906 A1 wird als nächstliegender Stand der Technik betrachtet und beschreibt ein Schaltverfahren für ein Fahrrad mit einem Überlappungsbereich welcher eine Schalt-Hysterese definiert.

Es ist eine Aufgabe der vorliegenden Erfindung ein Verfahren zum Steuern automatischer Schaltvorgänge einer elektrischen Gangschaltvorrichtung bereitzustellen, mit dem der Fahrkomfort eines Fahrradfahrers bei der Nutzung einer automatisierten Gangschaltvorrichtung weiter verbessert werden kann.

Diese Aufgabe wird einem Verfahren zum Steuern automatischer Schaltvorgänge einer elektrischen Gangschaltvorrichtung gemäß dem Patentanspruch 1 gelöst.

Bei dem erfindungsgemäßen Verfahren wird jedem Gang ein vorbestimmter Gangbereich zugeordnet. Unter Gangbereich ist ein Wertebereich für bestimmte Parameter zu verstehen, beispielsweise die Fahrradgeschwindigkeit, die Trittfrequenz, die Raddrehzahl, ein GPS-Signal, etc.. Jedem Gangbereich wird ein vorbestimmter unterer Grenzwert und ein vorbestimmter oberer Grenzwert zugeordnet. Der obere Grenzwert eines Gangbereichs ist jeweils um einen vorbestimmten Wert größer als der untere Grenzbereich des nächsthöheren Gangbereichs. Der obere Grenzwert eines Gangbereichs und der untere Grenzwert des nächsthöheren Gangbereichs definieren zwischen sich einen Überlappungsbereich. In dem Überlappungsbereich kann in Abhängigkeit von Geschwindigkeitsverlauf entweder ein Gang i oder der Gang i+1 eingelegt sein.

Der Geschwindigkeitsverlauf des Fahrrads hängt stark vom Fahrverhalten des Fahrers und der jeweiligen Fahrsituation ab. Das Fahrverhalten und auch die Fahrsituation können gemäß dem erfindungsgemäßen Verfahren das automatische Schalten der Gänge beeinflussen. Mit anderen Worten wird gemäß dem erfindungsgemäßen Verfahren anhand des Fahrverhaltens des Fahrers entschieden, wann welcher Gang im Überlappungsbereich zwischen zwei benachbarten Gangbereichen eingelegt wird bzw. welcher Gang eingelegt bleibt. Unter Geschwindigkeitsverlauf ist in diesem Zusammenhang die Entwicklung der Geschwindigkeit des Fahrrads über die Zeit zu verstehen.

Bei dem bekannten Stand der Technik werden Schaltpunkte zum automatischen Schalten mittels einer Hysterese festgelegt, um ein ständiges Hin- und Herschalten zwischen den Schaltpunkten zum Hochschalten und Herunterschalten festzulegen. Eine derartige Festlegung der Schaltpunkte mittels einer Hysterese kann während des Fahrens als unangenehm empfunden werden. Das erfindungsgemäße Verfahren verbessert das Verhalten einer automatischen Steuerung einer elektrischen Gangschaltvorrichtung insofern, dass in dem Überlappungsbereich zwischen zwei Gangbereichen anhand des Fahrverhaltens bzw. der Fahrsituation ermittelt wird, ob ein Gang i oder ein Gang i+1 eingelegt bleibt oder eingelegt wird. Dies erfolgt, wie bereits erwähnt, in Abhängigkeit des Verlaufs der Geschwindigkeit des Fahrrads.

Ferner werden anders als beim Stand der Technik bei dieser Weiterbildung des Verfahrens nicht ausschließlich vordefinierte Geschwindigkeitswerte berücksichtigt, die beispielsweise aus Tabellen ausgelesen werden können, sondern der Verlauf der Geschwindigkeit, die die Fahrsituation bzw. das Fahrverhalten wiederspiegeln. Mit der vorliegenden Erfindung wird somit erreicht, dass der Fahrer durch das an seinen Fahrstil angepasste automatische Schaltungsverhalten nicht gestört bzw. beeinträchtigt wird. Die vorliegende Erfindung ist somit nicht nur für sportliche Fahrer sondern auch für den Alltagsgebrauch des Fahrrads geeignet.

Gemäß der Erfindung kann aus einem aktiven Gang i heraus in den nächsthöheren Gang i+1 geschaltet werden, wenn die Geschwindigkeit einen unteren Grenzwert des nächsthöheren Gangbereichs überschreitet.

Ferner kann gemäß der Erfindung aus einem aktiven Gang i heraus in den nächstniedrigeren Gang i-1 geschaltet werden, wenn die Geschwindigkeit einen oberen Grenzwert des nächstniedrigeren Gangbereichs unterschreitet.

Die Geschwindigkeit, bei der eine Schaltoperation erfolgt ist, wird dieser Schaltoperation als Umschaltgeschwindigkeit zugeordnet. Anders ausgedrückt handelt es sich bei der Umschaltgeschwindigkeit um die Geschwindigkeit, mit der sich das Fahrrad bei einer letzten abgeschlossenen Schaltoperation bewegt hat.

Gemäß einer nicht beanspruchten Weiterbildung kann die Art der nächsten Schaltoperation in Abhängigkeit von der Umschaltgeschwindigkeit ermittelt werden. Als Art der Schaltoperation wird in diesem Zusammenhang "Hochschalten" in den nächsthöheren Gang oder "Herunterschalten" in den nächstniedrigeren verstanden. Da die Umschaltgeschwindigkeit die Geschwindigkeit bei einer letzten Schaltoperation angibt, wird bei der Ermittlung der Art der nächsten Schaltoperation gemäß dieser Weiterbildung des Verfahrens neben der Geschwindigkeit auch die Umschaltgeschwindigkeit berücksichtigt.

Gemäß einer nicht beanspruchten Weiterbildung der Erfindung kann in dem Überlappungsbereich die Art der nächsten Schaltoperation in Abhängigkeit davon bestimmt werden, ob die letzte Schaltoperation ein Hochschalten oder ein Herunterschalten war.

Gemäß einer nicht beanspruchten Weiterbildung des Verfahrens kann ein Hochschalten erfolgen, wenn die vorherige Schaltoperation ein Hochschalten war, und die Geschwindigkeit einen unteren Grenzwert eines Gangbereichs Gi überschreitet.

Ein Herunterschalten kann erfolgen, wenn die vorherige Schaltoperation ein Herunterschalten war und die Geschwindigkeit einen oberen Grenzwert unterschreitet.

Gemäß einer Weiterbildung des erfindungsgemäßen Verfahrens kann ein Hochschalten erfolgen, wenn die vorherige Schaltoperation ein Herunterschalten in den aktiven Gang i war, die Geschwindigkeit mindestens um einen vorbestimmten Schwellenwert höher liegt als die vorherige Umschaltgeschwindigkeit und die Geschwindigkeit höher als der untere Grenzwert des nächsthöheren Gangbereichs ist.

In diesem Zusammenhang kann ein Herunterschalten erfolgen, wenn die vorherige Schaltoperation ein Hochschalten in den aktiven Gang war, die Geschwindigkeit mindestens um einen vorbestimmten Schwellenwert niedriger liegt als die vorherige Umschaltgeschwindigkeit, und die Geschwindigkeit niedriger als der obere Grenzwert des nächstniedrigeren Gangbereichs ist.

Somit wird anhand des Verlaufs der Geschwindigkeit seit dem letzten abgeschlossenen Schaltvorgang, d.h. anhand der Umschaltgeschwindigkeit, ermittelt, ob ein Hochschalten oder ein Herunterschalten erfolgt. Dies hängt unter anderem davon ab, ob die Geschwindigkeit um einen vorbestimmten Schwellenwert über oder unter der vorherigen Umschaltgeschwindigkeit liegt. Fällt die Geschwindigkeit dabei unter den oberen Grenzwert des nächstniedrigeren Gangbereichs, wird heruntergeschaltet. Steigt die Geschwindigkeit im Gegensatz dazu über den unteren Grenzwert des nächsthöheren Gangbereichs, wird hochgeschaltet.

Hier werden nicht wie beim Stand der Technik ausschließlich vordefinierte Geschwindigkeitswerte berücksichtigt, die beispielsweise aus Tabellen ausgelesen werden, sondern der Verlauf der Geschwindigkeit und auch die Art der letzten Schaltoperation, die die Fahrsituation bzw. das Fahrverhalten des Fahrers wiederspiegeln.

Die Geschwindigkeit des Fahrrads kann kontinuierlich oder an vorbestimmten aufeinanderfolgenden Zeitpunkten ermittelt werden.

Die Geschwindigkeit kann demnach in vorbestimmten Zeitintervallen erfasst werden. Der Verlauf der Geschwindigkeit zwischen vorbestimmten aufeinanderfolgenden Zeitpunkten kann beeinflussen, welcher Gang eingelegt wird oder eingelegt bleibt. In diesem Zusammenhang kann der Verlauf der Geschwindigkeit gespeichert werden.

Jeder Gangbereich kann einem vorbestimmten Radgeschwindigkeitsbereich entsprechen. Ein Gangbereich kann beispielsweise von 0 bis 10 km/h sein und der nächsthöhere Gangbereich kann bei 8 km/h beginnen und bei 20 km/h enden. Der obere Grenzwert des Gangbereichs 1 wird von 10 km/h gebildet. Der untere Grenzwert des Gangbereichs 2 wird von 8 km/h gebildet. Der Überlappungsbereich zwischen dem Gangbereich 1 und dem Gangbereich 2 liegt dementsprechend zwischen 10 km/h, d.h. dem oberen Grenzwert des Gangbereichs 1, und 8 km/h, d.h. dem unteren Grenzwert des Gangbereichs 2. Der Überlappungsbereich gemäß diesem Beispiel entspricht somit 2 km/h. In diesem Überlappungsbereich von 2 km/h kann gemäß der Erfindung in Abhängigkeit von dem Verlauf der Geschwindigkeit und der vorherigen Schaltoperation ermittelt werden, ob der Gang i oder der Gang i+1 eingelegt wird oder eingelegt bleibt.

Der Betrag des Überlappungsbereichs entspricht somit der Differenz zwischen dem oberen Grenzwert des niedrigeren Gangbereichs und dem unteren Grenzwert des höheren Gangbereichs. Um bei dem voranstehend beschriebenen Beispiel zu bleiben, befindet sich der Überlappungsbereich des Gangbereichs 1 und des Gangbereichs 2 zwischen 8 und 10 km/h.

Ferner kann die Art einer Schaltoperation von wenigstens einer Erfassungseinheit erfasst werden. Derartige Erfassungseinheiten können beispielsweise Positionssensoren, Bewegungssensoren oder ähnliche Einheiten sein, die ermitteln können, ob hochgeschaltet oder heruntergeschaltet worden ist.

Gemäß einer nicht beanspruchten Weiterbildung der Erfindung werden zumindest die Art der letzten Schaltoperation und die ihr zugeordnete Umschaltgeschwindigkeit gespeichert.

Das Verfahren kann zur Steuerung einer elektrischen Gangschaltvorrichtung in Form einer Kettenschaltung oder einer Getriebenabe verwendet werden.

Die eingangs erwähnte Aufgabe der Erfindung wird ebenfalls von einer Steuervorrichtung mit den Merkmalen des Patentanspruchs 2 gelöst.

Die erfindungsgemäße Steuervorrichtung zum Steuern automatischer Schaltvorgängen einer elektrischen Gangschaltvorrichtung eines Fahrrads umfasst eine Gangbereichszuordnungseinheit, die dazu ausgebildet ist, jedem Gang einen vorbestimmten Gangbereich zuzuordnen, eine Grenzbereichszuordnungseinheit, die dazu ausgebildet ist, jedem Gangbereich einen vorbestimmten unteren Grenzwert und einen vorbestimmten oberen Grenzwert zuzuordnen, wobei die Grenzbereichszuordnungseinheit, die Grenzwerte derart zuordnet, dass der obere Grenzwert eines Gangbereichs jeweils um einen vorbestimmten Wert größer ist als der untere Grenzwert des nächsthöheren Gangbereiches ist, so dass der obere Grenzwert eines Gangbereichs und der untere Grenzwert des nächsthöheren Gangbereiches zwischen sich einen Überlappungsbereich definieren, und eine Geschwindigkeitserfassungseinheit zum Erfassen der Geschwindigkeit v des Fahrrads. Ferner weist die Steuerungsvorrichtung eine Gangbestimmungseinheit auf, die dazu ausgebildet ist, in dem Überlappungsbereich in Abhängigkeit von dem Verlauf der Geschwindigkeit zu bestimmen, ob ein Gang i oder ein Gang i+1 einlegbar ist.

Erfindungsgemäß weist die Steuervorrichtung eine Einheit auf, die einer vorherigen Schaltoperation eine Umschaltgeschwindigkeit zuordnet.

Die Steuervorrichtung weist eine Ermittlungseinheit auf, die dazu ausgebildet ist, zu ermitteln, ob die Geschwindigkeit nach der Umschaltgeschwindigkeit um einen Wert steigt oder sinkt, der größer oder gleich einem vorbestimmten Schwellenwert ist.

Die Steuervorrichtung kann eine Erfassungseinheit aufweisen, die zum Erfassen der Art einer Schaltoperation ausgebildet ist.

Die Steuervorrichtung kann ferner eine Speichereinheit aufweisen.

Die elektrische Gangschaltvorrichtung kann eine Kettenschaltung oder eine Getriebenabe eines Fahrrads sein.

Die vorliegende Erfindung betrifft ferner eine elektrische Gangschaltvorrichtung für ein Fahrrad mit einer Steuervorrichtung gemäß der voranstehend beschriebenen Art, wobei die elektrische Gangschaltvorrichtung eine Kettenschaltung oder eine Getriebenabe ist.

Im Folgenden werden Figuren beschrieben, die zur Erläuterung einer beispielhaften Ausführungsform der Erfindung dienen. Es stellen dar:
- Figur 1: eine schematische Darstellung einzelner Gangbereiche und deren Überlappungsbereiche;
- Figuren 2a bis 2d: Darstellungen verschiedener Geschwindigkeitsverläufe und Umschaltpunkte; und
- Figuren 3 bis 5: schematische Flussdiagramme, die einzelne Verfahrensschritte eines Ausführungsbeispiels des erfindungsgemäßen Verfahrens zeigen.

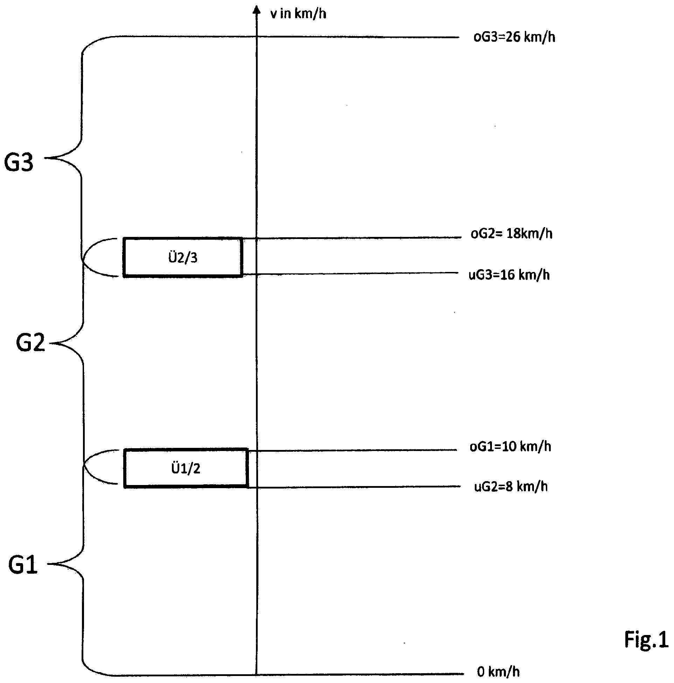

Figur 1 zeigt eine schematische Darstellung verschiedener Gangbereiche G1 bis G3 sowie deren Überlappungsbereiche Ü1/2 und Ü2/3.

Der Gangbereich G1 entspricht 0 bis 10 km/h, der Gangbereich G2 8 bis 18 km/h und der Gangbereich G3 16 bis 26 km/h.

Der Gangbereich G1 hat einen unteren Grenzwert uG1 von 0 km/h und einen oberen Grenzwert oG1 von 10 km/h. Der Gangbereich G2 hat einen unteren Grenzwert uG2 von 8 km/h und einen oberen Grenzwert oG2 von 18 km/h. Der Gangbereich G3 weist einen unteren Grenzwert uG3 von 16 km/h und einen oberen Grenzwert oG3 von 26 km/h auf.

Der Überlappungsbereich Ü1/2 befindet sich zwischen dem oberen Grenzwert oG1 des Gangbereichs G1 und des unteren Grenzwerts uG2 des Gangbereichs G2. Dies bedeutet, dass der Überlappungsbereich Ü1/3 zwischen dem Grenzwert oG1, der 10 km/h entspricht, und dem Grenzwert oG2 vorliegt, der 8 km/h entspricht. Der Grenzwert oG1 ist somit um einen vorbestimmten Wert höher als der untere Grenzwert uG2 des Gangbereichs G2. Dieser vorbestimmte Wert zwischen dem Grenzwert oG1 und dem Grenzwert oG2 ist gemäß diesem Beispiel 2 km/h. Dies gilt auch für den Überlappungsbereich Ü2/3 zwischen dem Gangbereich G2 und G3, der zwischen dem oberen Grenzwert oG2 des Gangbereichs G2 und dem unteren Grenzwert uG3 des Gangbereichs G3 vorliegt. Auch in diesem Zusammenhang ist der obere Grenzwert oG2 um einen vorbestimmten Wert höher als der untere Grenzwert uG3 des Gangbereichs G3. Dieser Wert entspricht auch im Fall des Überlappungsbereichs Ü2/3 2 km/h.

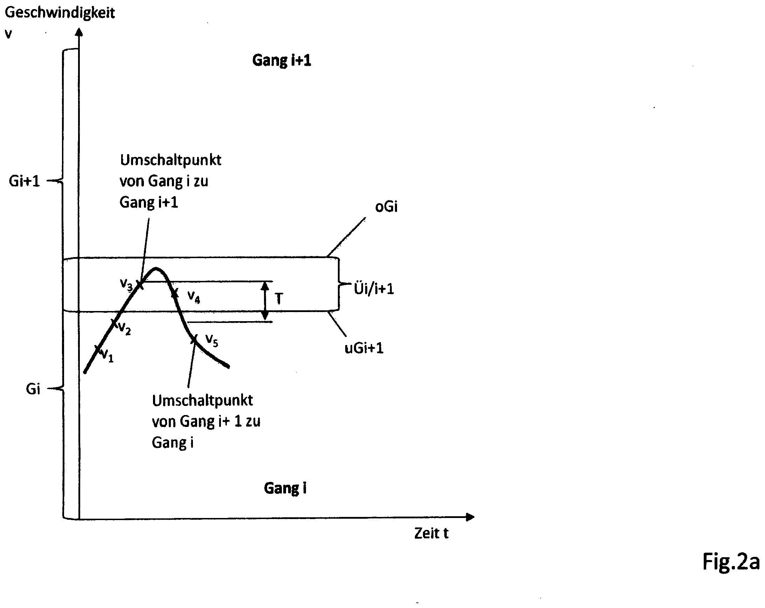

Figur 2a zeigt ein Diagramm eines möglichen Geschwindigkeitsverlaufs und die gemäß der vorliegenden Erfindung bestimmten Umschaltpunkte. An der Abszisse wird die Zeit t angetragen. Die Ordinate dient zum Antragen der Geschwindigkeit v.

In dem Diagramm gemäß Figur 2a sind mehrere Geschwindigkeitsmesspunkte dargestellt, die mit v₁ bis v₅ bezeichnet sind. In dem Diagramm sind schematisch die Gangbereiche Gi und der nächsthöhere Gangbereich Gi+1 dargestellt. Der Gangbereich Gi entspricht dem Gang i. Der Gangbereich Gi+1 entspricht dem Gang i+1.

Zwischen dem oberen Grenzwert oGi des Gangbereichs Gi und dem unteren Grenzwert uGi+1 wird der Überlappungsbereich Üi/i+1 gebildet. Der Grenzwert oGi ist um einen vorbestimmten Wert höher als der untere Grenzwert uGi+1.

In dem Diagramm gemäß Figur 2a steigt die Geschwindigkeit bis zur Geschwindigkeit v₃ an. In diesem Fall beschleunigt der Fahrer bzw. das Fahrrad. Im Anstieg bis zur Geschwindigkeit v₃ übersteigt die Geschwindigkeit v den unteren Grenzwert uGi+1 des Gangbereichs Gi+1. Die Geschwindigkeit v befindet sich somit in dem Überlappungsbereich Üi/i+1.

Da die Geschwindigkeit den unteren Grenzwert uGi+1 des nächsthöheren Gangbereichs Gi+1 überschritten hat, wird in den nächsthöheren Gang i, dem der Gangbereich Gi+1 zugeordnet ist, geschaltet. Der Umschaltpunkt in den Gang i entspricht in diesem Beispiel der Geschwindigkeit v₃. Die Geschwindigkeit v₃ am Umschaltpunkt von Gang i in den Gang i+1 wird dieser Schaltoperation als Umschaltgeschwindigkeit uv zugeordnet. Zudem wird erfasst, dass es sich bei der Art der Schaltoperation um eine Hochschaltoperation in den nächsthöheren Gang i+1 gehandelt hat.

Nach dem Umschaltpunkt (Umschaltgeschwindigkeit v₃) in den nächsthöheren Gang i+1 verlangsamt sich nach kurzer Zeit die Geschwindigkeit v des Fahrrads. Die Geschwindigkeit v fällt über die Geschwindigkeit v₄ unter den unteren Grenzwert uGi+1 des Gangbereichs Gi+1.

Wie bereits erwähnt, wird die Geschwindigkeit am Umschaltpunkt, d.h. die Geschwindigkeit v₃, diesem Schaltvorgang als Umschaltgeschwindigkeit uv zugeordnet. Gemäß dem erfindungsgemäßen Verfahren wird nun erfasst, ob die Geschwindigkeit v nach der Umschaltgeschwindigkeit v₃ um mehr als einen vorbestimmten Schwellenwert T steigt oder sinkt. Im Bespiel gemäß Figur 2a sinkt die Geschwindigkeit v. Nach der Umschaltgeschwindigkeit v₃ am Umschaltpunkt fällt die Geschwindigkeit auf die Geschwindigkeit v₅. Während dieses Absinkens auf die Geschwindigkeit v₅ sinkt die Geschwindigkeit um mehr als den vorbestimmten Schwellenwert T, so dass an der Geschwindigkeit v₅ vom Gang i+1 in den Gang i geschaltet werden kann. In diesem Fall muss der Geschwindigkeitsverlauf somit v≤ v₃ - T erfüllen, um in den nächstniedrigeren Gang i schalten zu können.

Zusammenfassend ist bezüglich Figur 2a festzuhalten, dass nach einem erfassten Hochschaltvorgang in den nächsthöheren Gang i+1 erfasst wird, wie sich der Geschwindigkeitsverlauf weiter entwickelt. Fällt die Geschwindigkeit ab der Umschaltgeschwindigkeit unter den unteren Grenzwert uGi+1 und um mehr als einen vorbestimmten Schwellenwert T, wird in den Gang i zurück geschaltet.

Liegt die Geschwindigkeit um mehr als einen vorbestimmten Schwellenwert T unter der Umschaltgeschwindigkeit am Umschaltpunkt, wird von dem Gang Gi+1 in den Gang Gi geschaltet. Das Verfahren gemäß der Erfindung schaltet demnach nach einem Schaltvorgang im Überlappungsbereich in einen niedrigeren Gang, wenn die Geschwindigkeit um einen vorbestimmten Schwellenwert T niedriger als die Umschaltgeschwindigkeit ist.

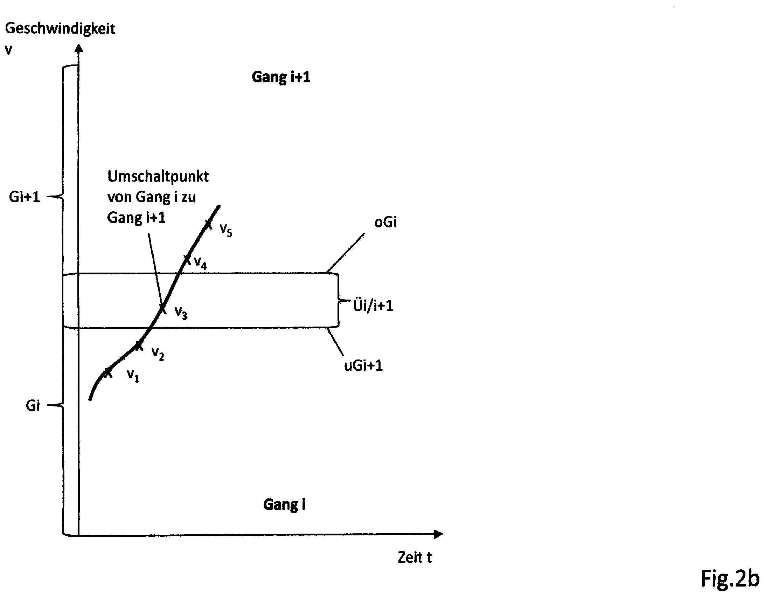

Figur 2b zeigt ein Diagramm eines Geschwindigkeitsverlaufs, der einer Beschleunigungsphase des Fahrrads entspricht. Dabei erhöht sich die Geschwindigkeit v des Fahrrads nahezu kontinuierlich. Sobald die Geschwindigkeit v einen unteren Grenzwert uGi+1 des Gangbereichs Gi+1 überschreitet, schaltet das Verfahren an der Geschwindigkeit v₃ von dem dem Gangbereich Gi entsprechenden Gang i in den dem Gangbereich Gi+1 entsprechenden Gang i+1. Die Geschwindigkeit v₃ befindet sich im Überlappungsbereich Üi/i+1.

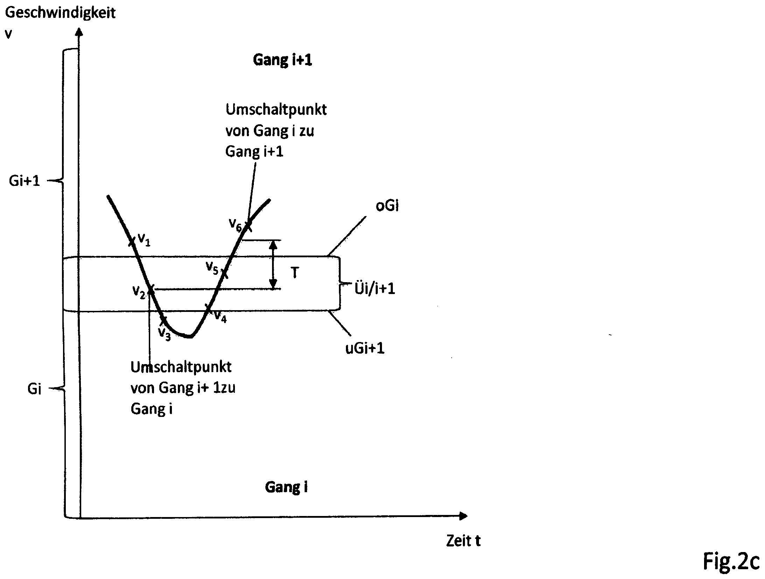

Figur 2c zeigt ein Diagramm eines Geschwindigkeitsverlaufs zwischen einer Verzögerungsphase und einer Beschleunigungsphase.

Die Geschwindigkeit v fällt von der Geschwindigkeit v₁ ab und unterschreitet den oberen Grenzwert oGi des Gangbereichs Gi wird. Die Geschwindigkeit v befindet sich somit im Überlappungsbereich Üi/i+1. An der Geschwindigkeit v₂ wird von dem dem Gangbereich Gi+1 entsprechenden Gang i+1 in den dem Gangbereich Gi entsprechenden Gang i geschaltet. Die Geschwindigkeit v₂ wird dieser Schaltoperation als Umschaltgeschwindigkeit uv zugeordnet. Die Geschwindigkeit v fällt unter den unteren Grenzwert uGi+1 des Gangbereichs Gi+1. Im Anschluss daran, wird das Fahrrad beschleunigt und die Geschwindigkeit v überschreitet wiederum den unteren Grenzbereich uGi+1 des Gangbereichs Gi+1. Die Geschwindigkeit v befindet sich im Überlappungsbereich Üi/i+1. Nach der Geschwindigkeit v₅ überschreitet die Geschwindigkeit v den oberen Grenzwert oGi des Gangbereichs Gi. Nach dem Überschreiten des oberen Grenzwerts oGi übersteigt die Geschwindigkeit v auch die Umschaltgeschwindigkeit v₂ um mehr als den Schwellenwert T. Wenn die Geschwindigkeit nach der letzten Schaltoperation um den vorbestimmten Schwellenwert T höher liegt als die Umschaltgeschwindigkeit v₂ kann in den dem Gangbereich Gi+1 entsprechenden höheren Gang i+1 geschaltet werden. Dementsprechend muss die Geschwindigkeit v in diesem Fall v≥ v₂ + T erfüllen, um wieder in den nächsthöheren Gang i+1 schalten zu können.

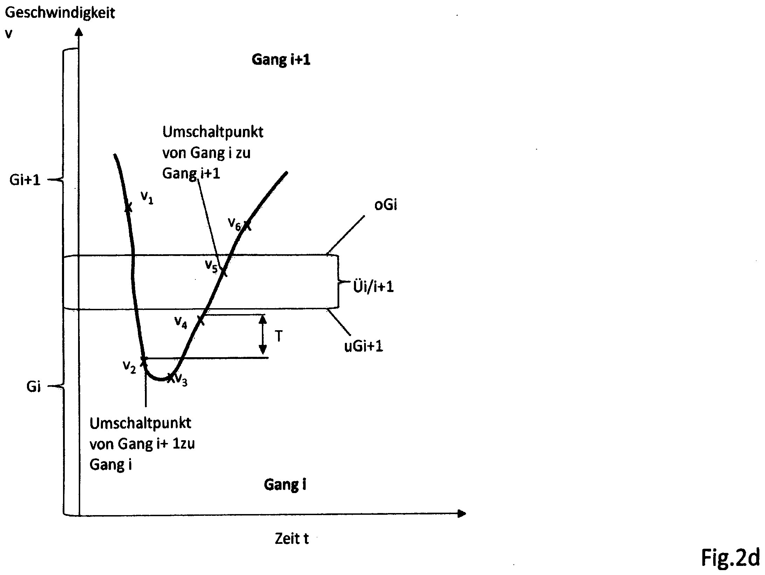

Figur 2d zeigt ein weiteres Diagramm eines beispielhaften Geschwindigkeitsverlaufs.

Das Fahrrad wird zunächst stark verzögert, sodass die Geschwindigkeit v von der Geschwindigkeit v₁ schnell auf die Geschwindigkeit v₂ abfällt. Im Zuge dieses Abfalls durchläuft die Geschwindigkeitskurve den Überlappungsbereich Üi/i+1 und unterschreitet den unteren Grenzwert uGi+1 des Gangbereichs Gi+1. Bei diesem Absinken fällt die Geschwindigkeit v dementsprechend auch unter den oberen Grenzwert oGi des Gangbereichs. Nach dem Unterschreiten des unteren Grenzwerts uGi+1 wird an der Geschwindigkeit v₂ von dem Gang i+1 in den dem Gangbereich Gi entsprechenden Gang i geschaltet. Die Geschwindigkeit v₂ wird dieser Schaltoperation als Umschaltgeschwindigkeit uv zugeordnet. Anschließend wird das Fahrrad wieder beschleunigt und die Geschwindigkeit v übersteigt einen Wert, der um den vorbestimmten Schwellenwert T höher liegt als die Umschaltgeschwindigkeit v₂. Die Geschwindigkeit v übersteigt dann den unteren Grenzwert uGi+1 und befindet sich in dem Überlappungsbereich Üi/i+1. Im Überlappungsbereich Üi/i+1 wird an der Geschwindigkeit v₅ von dem den Gangbereich Gi entsprechenden Gang i in den dem Gangbereich Gi+1 entsprechenden Gang i+1 geschaltet. Die Geschwindigkeit v steigt dann weiter an und verlässt den Überlappungsbereich Üi/i+1. Diese Schaltoperation ist möglich, weil der Geschwindigkeitsverlauf v≥ v₂ + T erfüllt und sich die Geschwindigkeit v im Überlappungsbereich Üi/i+1 befindet.

Zusammenfassend ist festzuhalten, dass gemäß der Erfindung anhand des Geschwindigkeitsverlaufs ermittelt wird, ob im Überlappungsbereich Üi/i+1 hochgeschaltet oder heruntergeschaltet wird. Nach einer vorangehenden bzw. der letzten Schaltoperation kann dann vom Gang i in den Gang i+1 geschaltet werden, wenn die Geschwindigkeit v ab der Umschaltgeschwindigkeit um einen Wert steigt, der größer oder gleich einem vorbestimmten Schwellenwert T ist. Ferner kann nach einer vorherigen Schaltoperation vom Gang i+1 in den Gang i zurück geschaltet werden, wenn die Geschwindigkeit v ab der Umschaltgeschwindigkeit um einen Wert sinkt, der größer oder gleich einem vorbestimmten Schwellenwert T ist.

Anders ausgedrückt wird nach einem Schaltvorgang im Überlappungsbereich weiter erfasst, wie sich die Geschwindigkeit entwickelt. Nach dem letzten Schaltvorgang wird abgewartet, ob nach dem Umschaltpunkt bzw. der zugehörigen Umschaltgeschwindigkeit die Geschwindigkeit v um einen vorbestimmten Schwellenwert T steigt oder fällt, bevor der nächste Schaltvorgang ausgeführt werden kann.

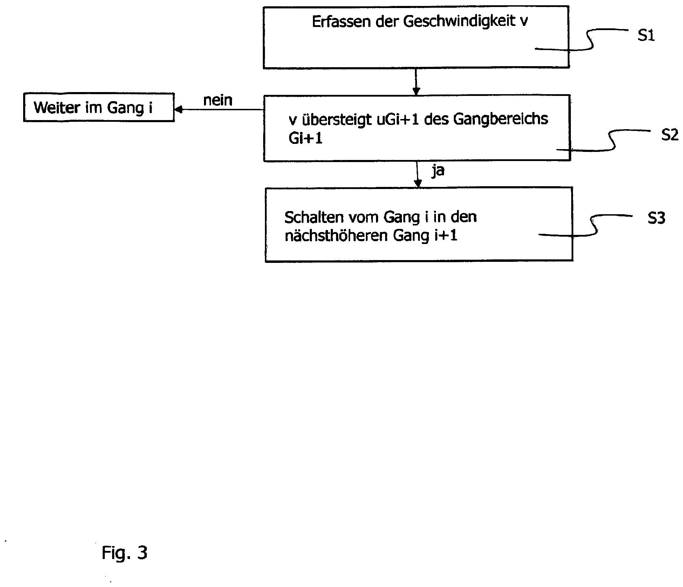

Figur 3 zeigt ein Flussdiagramm, das eine beispielhafte Hochschaltsequenz darstellt. Diese Hochschaltsequenz entspricht dem Diagramm des Geschwindigkeitsverlaufs gemäß Figur 2d.

Beginnend mit Schritt S1 wird während des gesamten Verfahrens die Geschwindigkeit v erfasst.

Im Schritt S2 wird ermittelt, ob die Geschwindigkeit v größer als der untere Grenzwert uGi+1 des Gangbereichs Gi+1 ist. Trifft dies nicht zu, bleibt weiter der Gang i eingelegt.

Ist die Geschwindigkeit v größer als der untere Grenzwert uGi+1 wird im Schritt S3 in den nächsthöheren Gang i+1 (+S) geschaltet.

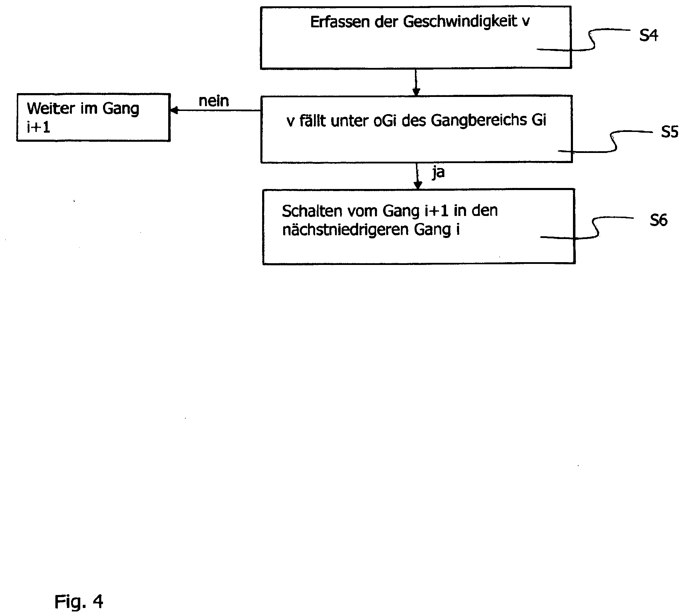

Figur 4 zeigt ein Flussdiagramm, das eine beispielhafte Herunterschaltsequenz darstellt.

Schritt S4 soll lediglich nochmals verdeutlichen, dass während des Verfahrens die Geschwindigkeit v des Fahrrads erfasst wird.

Im Schritt S5 wird ermittelt, ob die Geschwindigkeit v kleiner als der obere Grenzwert oGi des Gangbereichs Gi ist. Trifft dies nicht zu, bleibt weiter der Gang i+1 eingelegt.

Ist die Geschwindigkeit v kleiner als der obere Grenzwert oGi wird im Schritt S6 in den nächstniedrigeren Gang i (-S) geschaltet.

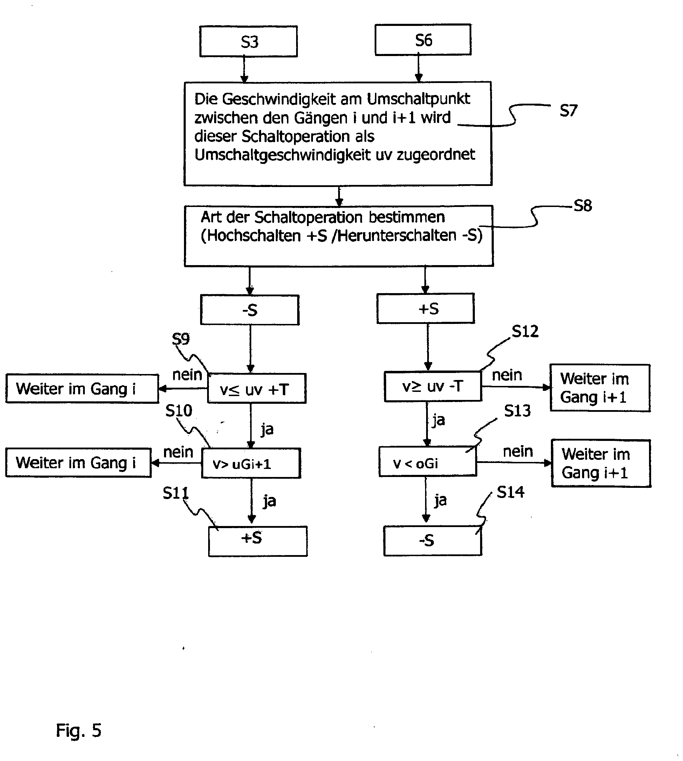

Figur 5 zeigt ein Flussdiagramm, das sich an die beiden Sequenzen gemäß Figur 3 und Figur 4 anschließen kann, d.h. es würde bereits ein oder mehrere Schaltoperationen ausgeführt.

Schritt S7 kann sich sowohl an Schritt S3 oder Schritt S6 anschließen.

Im Schritt S7 wird die Geschwindigkeit am Umschaltpunkt zwischen den Gängen i und i+1 dieser Schaltoperation als Umschaltgeschwindigkeit uv zugeordnet. Unabhängig davon, ob vorher ein Hochschaltvorgang (+S) oder ein Herunterschaltvorgang (-S) erfolgte, wird der letzten Schaltoperation eine Umschaltgeschwindigkeit zugeordnet.

Im Schritt S8 wird die Art der letzten Schaltoperation ermittelt, d.h. ob die letzte Schaltoperation ein Hochschaltvorgang (+S) oder ein Herunterschaltvorgang (-S) war.

Falls in Schritt S8 ermittelt wurde, dass ein Herunterschaltvorgang (-S) ausgeführt wurde, wird im Schritt S9 ermittelt, ob die Geschwindigkeit v seit dem Umschaltpunkt und der zugehörigen Umschaltgeschwindigkeit uv um einen Wert gestiegen ist, der größer oder gleich einem vorbestimmten Schwellenwert T ist. Es wird demnach geprüft, ob v≥uv+T erfüllt ist.

Trifft dies zu, so wird in Schritt S10 ermittelt, ob die Geschwindigkeit v größer als ein unterer Grenzwert uGi+1 des Gangbereichs Gi+1 ist.

Ist die Geschwindigkeit v höher als der Grenzwert uGi+1 wird im Schritt S11 hochgeschaltet (+S).

Die Sequenz gemäß der Schritte S7 bis S11 entspricht im Wesentlichen den in den Figuren 2b und 2d dargestellten Fällen. Die Schritte S9 und S10 können jeweils auch in vertauschter Reihenfolge ausgeführt werden.

Wurde in Schritt S7 ermittelt, dass ein Hochschaltvorgang (+S) ausgeführt wurde, wird im Schritt S12 ermittelt, ob die Geschwindigkeit v seit dem Umschaltpunkt und der zugehörigen Umschaltgeschwindigkeit uv um einen Wert gesunken ist, der größer oder gleich einem vorbestimmten Schwellenwert T ist. Es wird demnach geprüft, ob v≤uv-T erfüllt ist.

Trifft dies zu wird in Schritt S13 ermittelt, ob die Geschwindigkeit v kleiner als ein oberer Grenzwert oGi des Gangbereichs Gi ist.

Ist die Geschwindigkeit v niedriger als der Grenzwert oGi wird im Schritt S14 herunter geschaltet (-S).

Die Sequenz gemäß der Schritte S7, S8 und S12 bis S14 entspricht im Wesentlichen dem in Figur 2a dargestellten Fall. Die Schritte S12 und S13 können jeweils auch in vertauschter Reihenfolge ausgeführt werden.

## Patentansprüche

1. Verfahren zum Steuern automatischer Schaltvorgänge einer elektrischen Gangschaltvorrichtung eines Fahrrads, wobei jedem Gang (1, 2,..., i,...n) ein vorbestimmter Gangbereich (G1, G2, G3, ..., Gi; ...; Gn) zugeordnet ist, und jedem Gangbereich ein vorbestimmter unterer Grenzwert (uG1; uG2; uGi) und ein vorbestimmter oberer Grenzwert (oG1, oG2, oGi) zugeordnet ist, wobei der obere Grenzwert (oGi) eines Gangbereichs (Gi) jeweils um einen vorbestimmten Wert größer ist als der untere Grenzwert (uGi+1) des nächsthöheren Gangbereichs (Gi+1), wobei der obere Grenzwert (oGi) eines Gangbereichs (Gi) und der untere Grenzwert (uGi+1) des nächsthöheren Gangbereichs (Gi+1) zwischen sich einen Überlappungsbereich (Üi/i+1) definieren, wobei in dem Überlappungsbereich (Üi/i+1) in Abhängigkeit vom Verlauf der Geschwindigkeit v entweder der Gang i oder der Gang i+1 eingelegt ist; wobei aus einem aktiven Gang (i) heraus in den nächsthöheren Gang (i+1) geschaltet werden kann, wenn die Geschwindigkeit v einen unteren Grenzwert (uGi+1) des nächsthöheren Gangbereiches (Gi+1) überschreitet und die Geschwindigkeit v, bei der eine Schaltoperation erfolgt ist, dieser Schaltoperation als Umschaltgeschwindigkeit uv zugeordnet wird;
wobei aus einem aktiven Gang (i) heraus in den nächstniedrigeren Gang (i-1) geschaltet werden kann, wenn die Geschwindigkeit v einen oberen Grenzwert (oGi-1) des nächstniedrigeren Gangbereiches (Gi-1) unterschreitet und die Geschwindigkeit v, bei der eine Schaltoperation erfolgt ist, dieser Schaltoperation als Umschaltgeschwindigkeit uv zugeordnet wird;
wobei ein Hochschalten (+S) dann erfolgt, wenn
- die letzte Schaltoperation ein Herunterschalten (-S) in den aktiven Gang (i) war,
- die Geschwindigkeit v mindestens um einen vorbestimmten Schwellenwert (T) höher liegt als die vorherige Umschaltgeschwindigkeit **uv**, und
- die Geschwindigkeit v höher ist als der untere Grenzwert (uGi+1) des nächsthöheren Gangbereiches (Gi+1), oder wobei ein Herunterschalten (-S) dann erfolgt, wenn
- die letzte Schaltoperation ein Hochschalten (+S) in den aktiven Gang (i) war,
- die Geschwindigkeit v mindestens um einen vorbestimmten Schwellenwert (T) niedriger liegt als die vorherige Umschaltgeschwindigkeit **uv**, und
- die Geschwindigkeit v niedriger ist als der obere Grenzwert (oGi) des nächstniedrigeren Gangbereiches (Gi-1).

2. Steuervorrichtung zum Steuern automatischer Schaltvorgänge einer elektrischen Gangschaltvorrichtung eines Fahrrads nach dem Verfahren von Anspruch 1, mit
einer Gangbereichszuordnungseinheit, die dazu ausgebildet ist, jedem Gang (1, 2,..., i,...n) einen vorbestimmten Gangbereich (G1, G2, G3, ..., Gi; ...; Gn) zuzuordnen,
einer Grenzbereichszuordnungseinheit, die dazu ausgebildet ist, jedem Gangbereich den vorbestimmten unteren Grenzwert (uG1; uG2; uGi) und den vorbestimmten oberen Grenzwert (oG1, oG2, oGi) zuzuordnen, wobei die Grenzbereichszuordnungseinheit, die Grenzwerte derart zuordnet, dass der obere Grenzwert (oGi) eines Gangbereichs (Gi) jeweils um den vorbestimmten Wert größer ist als der untere Grenzwert (uGi+1) des nächsthöheren Gangbereiches (Gi+1),
einer Geschwindigkeitserfassungseinheit zum Erfassen der Geschwindigkeit v des Fahrrads, und
einer Gangbestimmungseinheit, die dazu ausgebildet ist, in dem Überlappungsbereich (Üi,i+1) in Abhängigkeit von einem Verlauf der Geschwindigkeit v zu bestimmen, ob ein Gang i oder ein Gang i+1 einlegbar ist, wobei die Steuervorrichtung eine Einheit aufweist, die der letzten Schaltoperation eine Umschaltgeschwindigkeit uv zuordnet und
wobei die Steuervorrichtung eine Ermittlungseinheit aufweist, die dazu ausgebildet ist, zu ermitteln, ob die Geschwindigkeit v nach der Umschaltgeschwindigkeit uv um einen Wert steigt oder sinkt, der größer oder gleich einem vorbestimmten Schwellenwert (T) ist.

3. Elektrische Gangschaltvorrichtung für ein Fahrrad mit einer Steuervorrichtung gemäß dem Anspruch 2, wobei die elektrische Gangschaltvorrichtung eine Kettenschaltung oder eine Getriebenabe ist.

## Claims

1. Method for controlling automatic gear shift processors of an electric gear speed shifting device of a bicycle, wherein each gear speed (1, 2, ..., i, ...n) is assigned a predetermined gear speed range (G1, G2, G3, ..., Gi; ...; Gn), and each gear speed range is assigned a predetermined lower limiting value (uGl; uG2; uGi) and a predetermined upper limiting value (oG1, oG2, oGi), wherein the upper limiting value (oGi) of a gear speed range (Gi) is larger in each case by a predetermined value than the lower limiting value (uGi+1) of the next highest gear speed range (uGi+1), wherein the upper limiting value (oGi) of a gear speed range (Gi) and the lower limiting value (uGi+1) of the next highest gear speed range (Gi+1) define between them an overlapping region (Üi/i+1), wherein in the overlapping region (Üi/i+1) either the gear speed i or the gear speed i+1 is engaged depending on the profile of the speed v; wherein it is possible to switch from an active gear speed (i) into the next highest gear speed (i+1) if the speed v exceeds a lower limiting value (uGi+1) of the next highest gear speed range (Gi+1) and the speed v at which a gear shift operation has taken place is assigned to this gear shift operation as a shifting speed uv; wherein it is possible to shift from an active gear speed (i) into the next lowest gear speed (i-1) if the speed v undershoots an upper limiting value (oGi-1) of the next lowest gear speed range (Gi-1) and the speed v at which a gear shift operation has taken place is assigned to this gear shift operation as a shifting speed uv; wherein shifting up (+S) takes place when
- the last gear shift operation was shifting down (-S) into the active gear speed (i),
- the speed v is higher than the previous shifting speed **uv** at least by a predetermined threshold value (T), and
- the speed v is higher than the lower limiting value (uGi+1) of the next highest gear speed range (Gi+1), or wherein shifting down (-S) takes place if
- the last gear shift operation was shifting up (+S) into the active gear speed (i),
- the speed v is lower than the previous shifting speed **uv** at least by a predetermined threshold value (T), and
- the speed v is lower than the upper limiting value (oGi) of the next lowest gear speed range (Gi-1).

2. Control device for controlling automatic gear shift processes of an electric gear speed shifting device of a bicycle according to the method in Claim 1, having
a gear speed range assignment unit which is designed to assign a predetermined gear speed range (G1, G2, G3, ..., Gi; ...; Gn) to each gear speed (1, 2, ..., i, ...n),
a gear speed range assignment unit which is designed to assign the predetermined lower limiting value (uGl; uG2; uGi) and the predetermined upper limiting value (oG1, oG2, oG3) to each gear speed range, wherein the gear speed range assignment unit assigns the limiting values in such a way that the upper limiting value (oGi) of a gear speed range (Gi) is in each case larger than the lower limiting value (uGi+1) of the next highest gear speed range (Gi+1), by the predetermined value,
a speed sensing unit for sensing the speed v of the bicycle, and
a gear speed determining unit which is designed to determine, in the overlapping region (Üi,i+1) as a function of a profile of the speed v, whether a gear speed i or a gear speed i+1 can be engaged,
wherein the control device has a unit which assigns a shifting speed uv to the last shifting operation, and wherein the control device has a detection unit which is designed to detect whether the speed v decreases or increases after the shifting speed uv by a value which is higher than or equal to a predetermined threshold value (T).

3. Electric gear speed shifting device for a bicycle having a control device according to Claim 2, wherein the electric gear speed shifting device is a derailleur system or a gear hub system.

## Revendications

1. Procédé de commande d'opérations automatiques de changement de rapport d'un dispositif électrique de changement de rapport d'un vélo, dans lequel une plage prédéterminée de rapports (G1, G2, G3, ..., Gi ; ... ; Gn) est associée à chaque rapport (1, 2, ..., i, ... n) et une valeur limite inférieure prédéterminée (uG1 ; uG2 ; uGi) et une valeur limite supérieure prédéterminée (oG1, oG2, oGi) sont associées à chaque plage de rapports, dans lequel la valeur limite supérieure (oGi) d'une plage de rapports (Gi) est respectivement supérieure d'une valeur prédéterminée à la valeur limite inférieure (uGi+1) de la plage de rapports immédiatement supérieure (Gi+1), dans lequel la valeur limite supérieure (oGi) d'une plage de rapports (Gi) et la valeur limite inférieure (uGi+1) de la plage de rapports immédiatement supérieure (Gi+1) définissent entre elles une plage de chevauchement (Üi/i+1), dans lequel soit le rapport i, soit le rapport i+1 est engagé dans la plage de chevauchement (Üi/i+1) en fonction de l'évolution de la vitesse v ;
dans lequel il est possible d'effectuer un passage d'un rapport actif (i) au rapport immédiatement supérieur (i+1) lorsque la vitesse v dépasse une valeur limite inférieure (uGi+1) de la plage de rapports immédiatement supérieure (Gi+1) et la vitesse v à laquelle une opération de changement de rapport a eu lieu est associée à ladite opération de changement de rapport en tant que vitesse de changement de rapport uv ;
dans lequel il est possible d'effectuer un passage d'un rapport actif (i) au rapport immédiatement inférieur (i-1) lorsque la vitesse v passe en dessous d'une valeur limite supérieure (oGi-1) de la plage de rapports immédiatement inférieure (Gi-1) et la vitesse v à laquelle une opération de changement de rapport a eu lieu est associée à ladite opération de changement de rapport en tant que vitesse de changement de rapport uv ;
dans lequel un changement de rapport croissant (+S) se produit lorsque
- la dernière opération de changement de rapport a été un changement de rapport décroissant (-S) vers le rapport actif (i),
- la vitesse v est supérieure à la vitesse de changement de rapport uv précédente d'au moins une valeur de seuil prédéterminée (T), et
- la vitesse v est supérieure à la valeur limite inférieure (uGi+1) de la plage de rapports immédiatement supérieure (Gi+1),
ou dans lequel un changement de rapport décroissant (-S) se produit lorsque
- la dernière opération de changement de rapport a été un changement de rapport croissant (+S) vers le rapport actif (i),
- la vitesse v est inférieure à la vitesse de changement de rapport uv précédente d'au moins une valeur de seuil prédéterminée (T), et
- la vitesse v est inférieure à la valeur limite supérieure (oGi) de la plage de rapports immédiatement inférieure (Gi-1).

2. Dispositif de commande pour la commande d'opérations automatiques de changement de rapport d'un dispositif électrique de changement de rapport d'un vélo conformément au procédé selon la revendication 1, comprenant
une unité d'association de plage de rapports, qui est conçue pour associer une plage de rapports prédéterminée (G1, G2, G3, ..., Gi ; ... ; Gn) à chaque rapport (1, 2, ..., i, ... n),
une unité d'association de plage limite conçue pour associer à chaque plage de rapports la valeur limite inférieure prédéterminée (uGl ; uG2 ; uGi) et la valeur limite supérieure prédéterminée (oG1, oG2, oGi), dans lequel l'unité d'association de plage limite associe des valeurs limites de telle sorte que la valeur limite supérieure (oGi) d'une plage de rapports (Gi) soit respectivement supérieure de la valeur prédéterminée à la valeur limite inférieure (uGi+1) de la plage de rapports immédiatement supérieure (Gi+1),
une unité de détection de vitesse destinée à détecter la vitesse v du vélo, et
une unité de détermination de rapport, qui est conçue pour déterminer si un rapport i ou un rapport i+1 peut être engagé dans la plage de chevauchement (Üi, i+1) en fonction d'une évolution de la vitesse v,
le dispositif de commande comportant une unité qui associe une vitesse de changement de rapport uv à la dernière opération de changement de rapport et
le dispositif de commande comportant une unité de détermination, qui est conçue pour déterminer si la vitesse v augmente ou diminue d'une valeur qui est supérieure ou égale à une valeur de seuil prédéterminée (T) selon la vitesse de changement de rapport uv.

3. Dispositif électrique de changement de rapport destiné à un vélo comportant un dispositif de commande selon la revendication 2, le dispositif électrique de changement de rapport étant un dérailleur ou un moyeu de vitesse.
